## Europäisches Patentamt
## European Patent Office
## Office européen des brevets

(19)

(11) Publication number: **0 004 385**
**B1**

(12)

# EUROPEAN PATENT SPECIFICATION

(45) Date of publication of patent specification: **23.03.83**

(51) Int. Cl.³: **C 04 B 43/02**

(21) Application number: **79100907.9**

(22) Date of filing: **26.03.79**

(54) Process for forming a refractory fiber article and article obtained by said process.

(30) Priority: **29.03.78 US 891368**

(43) Date of publication of application:
**03.10.79 Bulletin 79/20**

(45) Publication of the grant of the patent:
**23.03.83 Bulletin 83/12**

(84) Designated Contracting States:
**BE DE FR GB IT NL**

(56) References cited:
**DE - B - 1 117 031**
**NL - A - 7 204 429**
**US - A - 2 886 466**

**Kirk-Othmer's Encyclopedia of Chemical
Technology, 3d Ed., Vol 2, pages 214—215.**

(73) Proprietor: **THE CARBORUNDUM COMPANY**
**345 Third Street Post office Box 156**
**Niagara Falls, New York 14302 (US)**

(72) Inventor: **Korklan, Harris Jeffrey**
**51811 Purdue Court**
**Granger Indiana (US)**
Inventor: **Greany, John Kevin**
**21366 Ravenna Drive**
**South Bend Indiana (US)**

(74) Representative: **Patentanwälte Dipl.-Ing. A.
Grünecker, Dr.-Ing. H. Kinkeldey, Dr.-Ing. W.
Stockmair,
Dr. rer. nat. K. Schumann, Dipl.-Ing. P. Jakob, Dr.
rer. nat. G. Bezold Maximilianstrasse 43
D-8000 München 22 (DE)**

Courier Press, Leamington Spa, England.

# A process for forming a refractory fibre article by impregnating a fibre mat

The invention relates to a process for forming a refractory fibre article by impregnating a fibre mat with a conditioned colloidal silica composition, permitting the conditioned colloidal silica composition to gel and drying the resulting fibre article.

Binder compositions in the prior art for binding refractory fibres were frequently not entirely satisfactory. Many such binders contained organic materials such as the binders disclosed in U.S.—A—3,835,054; 3,961,968 and 3,944,702. Such organic compounds are highly undesirable since they decompose at high temperature conditions frequently encountered by the insulation material.

It has been suggested in U.S.—A—3,551,266 that migration of colloidal silica binder could be prevented by a gelation step. Such a system is useful in refractory cement containing refractory fibres, when the cement is to be rapidly applied to a particular substrate. Unfortunately, the system has been inapplicable to the production of refractory fibre articles in a continuous or semi-continuous process due to the difficulties in controlling gelation.

A process for forming a refractory fibre article by impregnating a fibre mat is known in accordance with the prior art portion of claim 1 (NL—A—72 044 29) in which the impregnation is carried out with an aqueous colloidal silicic acid solution destabilized with an electrolite. Furthermore, in that prior art process the resulting fibre article is gelled in situ at room temperature for less than 24 hours. In addition it is known from US—A—2,886,466 to prepare refractory fibre articles by impregnating the fibres with a composition comprises a silica solution, a clay and an aluminium salt. Later, the impregnated article is dried at an elevated temperature. This prior art process requires, however, the presence of a large percentage of clay (at least 50 percent) and this high clay percentage apparently detrimentally effects the gelling process. Thus the binder is free to migrate which may cause severe defects.

DE—B—11 17 031 discloses a process for the production of a refractory article comprising forming a slurry of silicon containing fibres, forming a felt and drying the resulting felt. Before forming the felt, a variety of silica and silica-alumina containing substances and/or alkali and alkaline earth containing substance are added in granular form to the slurry. Before drying of the resulting product, a liquid suspension of an inorganic binder as, for example, colloidal silica, colloidal alumina, colloidal aluminum phosphate and mixtures thereof, is added onto the felt.

The invention as claimed is intended to remedy drawbacks of the prior art processes and, in particular, aims to prevent binder migration.

The invention solves the problem of binder migration as indicated in the characterizing clause of claim 1.

The advantages offered by the invention are mainly that binder migration is prevented in the resulting article which causes the resulting products to have dried colloidal silica being uniformly distributed throughout the article.

One way of carrying out the invention is described in detail below with reference to drawings which illustrate only one specific embodiment, in which

Fig. 1 is a flow diagram showing a process for the preparation of an article in accordance with the invention and

Fig. 2 is a schematic diagram of an apparatus for forming the fibre article in accordance with the invention.

Detailed description of the invention

The refractory fibre which may be bound into a refractory fibre article is essentially any fibre which is heat resistant at temperatures above about 1000°C. Examples of such refractory fibres include mullite fibres ($3Al_2O_3 . 2SiO_2$), aluminosilicate fibres ($Al_2O_3 . SiO_2$ approximately), silica fibres ($SiO_2$), zirconia fibres ($ZrO_2$), or aluminosilicate chromia fibres (48% $Al_2O_3 \cdot 48\%$ $SiO \cdot 4\%$ $Cr_2O_3$, expressed as mole percentages), or naturally occurring fibres such as asbestos fibres. A particularly desirable ceramic fibre is available under the trade name Fiberfrax from The Carborundum Company which is described in the Condensed Chemical Dictionary, 8th Edition, Van Nostrand-Reinhold, 1971 as a ceramic fibre basically composed of 51.3% of $Al_2O_3$ and 47.2% of $SiO_2$. Such fibres are capable of withstanding continuous use temperatures up to 1260°C (2300°F).

"Colloidal silica" as used herein is silica in colloidal form in an aqueous system. The colloidal silica may be prepared by passing sodium silicate through a bed of cation-exchange resin in the hydrogen form. Colloidal silicas are available from numerous manufacturers including E. I. du Pont Company under the trade designation Ludox.

"Conditioned colloidal silica" as used herein means a dispersion of from 15 to 40 weight percent, preferably from 15 to 30 weight percent, and most preferably from 15 to 20 weight percent colloidal silica in water to which one or more additives have been incorporated to obtain a gel time of from 5 to 30 minutes and preferably from 10 to 20 minutes at operating temperatures. One of the additives is sufficient acid to obtain a pH of below 7.5 and preferably between 4.7 and 7.0 and most preferably between 4.8 and 5.4 when hydrochloric acid is used as the acid. Hydrochloric acid is desirable since it is effective and inexpensive. Other acids may be used such as acetic acid, sulfuric acid and phosphoric acid. Another additive which is used is aluminium chlorohydrate, i.e., $[Al_2(OH)_5Cl]_x$ also known as aluminum chlorhydroxide which in concentrations as low as between 0.05 to 0.12 weight percent causes colloidal silica in concentrations as low as from 15 to 20 weight percent to gel in less than 20 minutes at a pH of from 4.8 to 5.4 at room temperature. Such low concentrations of colloidal silica are highly desirable since application is more easily controlled and less colloidal silica is retained by an article to which it is applied thus reducing cost. If temperature is increased, gel time can be decreased. Table I in Example I shows the effects of colloidal silica concentration, temperature, pH, type of acid, and aluminium chlorhydrate multivalent cation gelling agent upon colloidal silica gel time.

"Colloidal clay" as used herein means any refractory inorganic clay having a colloidal particle size. An example of a suitable colloidal clay is bentonite.

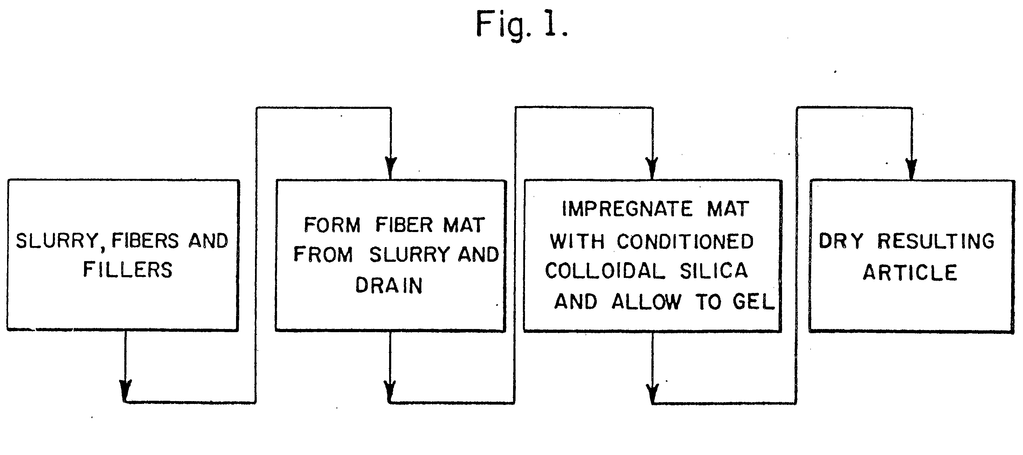

As seen in Figure 1, in accordance with a preferred embodiment of the invention, refractory fibres and fillers such as silica flour and clay are dispersed into water. Small amounts of colloidal silica and multivalent cation containing compound may also be added. The dispersion is then formed into a mold and liquid is drained from the fibres. The fomed fibre mat is then released from the mold into a carrier, placed in a second station and soaked with conditioned colloidal silica. A differential pressure is then desirably though not essentially applied through the fibre mat, usually in the form of a vacuum. The conditioned colloidal silica remaining in the fibre mat is then permitted to gel and the article is dried and cured with heat.

The refractory fibre article in accordance with the invention is manufactured by slurrying refractory fibres into a liquid which, for many reasons including low cost, non-flammability and low toxicity, is usually water. The refractory fibres in the slurry usually comprise from 0.5 up to 10 percent by weight of the slurry and preferably comprise from 0.5 to 3 percent by weight of the slurry. The slurry desirably also contains from 0.02 weight percent to 2 percent, preferably from about 0.04 weight percent to 0.4 weight percent and most preferably from 0.04 to 0.2 weight percent colloidal silica. It has also been found that from 0.01 to 0.1 percent of colloidal clay and from 0.01 to 0.1 percent of aluminum chlorhydrate are beneficially added to the slurry.

The clay is desirably, though not necessarily, premixed in water to form a 2 to 5 weight percent dispersion prior to addition to the slurry.

In forming the slurry, the fibre is desirably added to agitated water followed by the independent addition of colloidal silica, clay and multivalent cation containing compounds and silica flour filler in the listed order.

After all of the components are added to the slurry, the slurry is desirably thoroughly and rapidly mixed for from 5 to 30 minutes. The slurry is continuously agitated while it is pumped or drawn by a vacuum to a mold submerged in the slurry wherein water from the slurry is permitted to pass through a screen in the mold thus forming a fibre mat against the screen. The thickness of the mat is determined by the fiber concentration in the slurry and the quantity of liquid passing through the screen which in turn is determined by the length of time the mold remains submerged in the slurry. The mold is then removed from the slurry and excess liquid is removed from the mold by gravity draining, vacuum, compressed air or any other suitable means.

The damp mat is then removed from the mold by any suitable means such as picking the mat up with a suction device or rotating the mold 180° so that the mat falls from the mold by gravity. Compressed air may be applied through the mold screen to assist in loosening and removing the mat. After the mat is removed, it is carried to a frame which permits a vacuum to be drawn through the mat. The mat may be carried by any holding and transporting means such as a holding tray or a suction carrier attached to a chain or belt conveyor.

The fibre mat is then impregnated, i.e., soaked, with a conditioned colloidal silica composition which in a preferred embodiment of the invention comprises from 98.5 to 99 weight percent of a 15% dispersion of colloidal silica, from 0.3 to 1% of HCl and from about .05 to 0.8 weight percent of aluminum chlorhydrate. The article is preferably impregnated with from 10% to 80% volume percent of the conditioned colloidal silica composition.

After the article is impregnated with the conditioned colloidal silica composition, in a preferred embodiment of the invention a differential pressure, usually in the form of a vacuum, is applied to pull excess liquid through the article. Generally, in the preferred embodiment, when the article is 5 mm thick, a vacuum of from 800 to 1333 pA (6 to 10 cm Hg) is applied for from 15 to 20 seconds. When the article is 10 mm thick, a vacuum of from 933 to 1600 Pa (7 to 12 cm Hg) is applied for from 20 to 45 seconds, when the article is 25 mm thick, a vacuum of from 1600 to 3333 Pa (12 to 25 cm Hg) is applied for from 30 to 60 seconds, and when the article is 50 mm thick, a vacuum of from 3333 to 6000 Pa (25 to 45 cm Hg) is applied for from 30 to 60 seconds, with adjustments made as necessary.

The post soaked article, such as an insulation board, is then placed on a drying plate and dried at a temperature of from about 150 to 600°C for from 1 to 12 hours.

The resulting finished inorganic refractory insulation article, which is usually an insulation board, comprises randomly oriented refractory fibres retained by dried colloidal silica uniformly distributed throughout the article and from 0.001 to 1.5 weight percent of the decomposition product of aluminum chlorhydrate. The article is characterized by uniform strength and does not smoke, discolor, or flame upon exposure to a high temperature (e.g. above 350°C) oxygen containing atmosphere. When the article is an insulation board, it desirably has a density of from 0.4 to 0.6 g/cm³ contains from 30 to 50 weight percent fibre, contains from 10 to 45 weight percent dried colloidal silica, contains from 0.001 to 1.5 weight percent of the decomposition product of aluminum chlorhydrate and the balance being a filler selected from the group consisting of ground silica having an average particle size of smaller than 74 μm (200 mesh), colloidal clay and mixtures thereof.

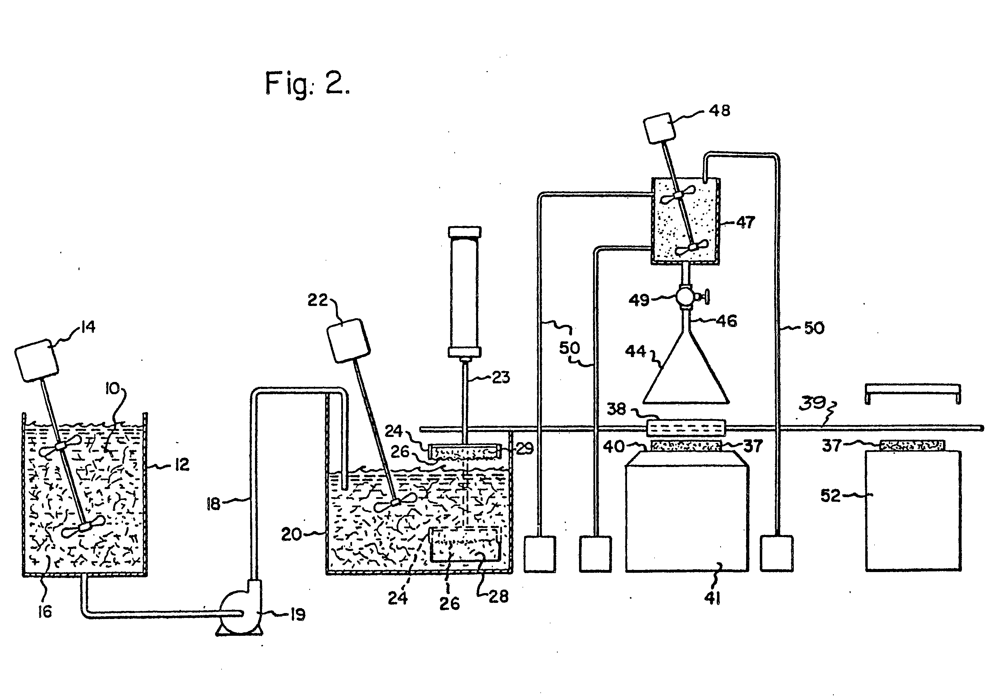

As best seen in Figure 2, in accordance with a preferred embodiment of the invention, refractory fibres 10 are dispersed in a tank 12 by means of agitator 14. Resulting slurry 16 is then transported through pipe 18 by means of pump 19 into forming tank 20. In forming tank 20, the slurry is maintained by means of mixer 22. Mold 24 provided with screen 26 is then immersed into tank 20 by an immersing means which may be a hydraulic support 23. Liquid is then permitted to pass through screen 26 thus collecting a mat of fibres 29. Liquid may be assisted in passing through the screen by a pump or vacuum device 28. Mold 24 is then removed from tank 20 by means of support 23 and liquid is removed from mat 29 by draining. The draining can be assisted by a vacuum or compressed air.

A transfer box 38 on a track 39 then picks up mat 29 which is in the form of a board 37 by means of a vacuum and places board 37 on vacuum plate 40 at post soak station 41. Fibre mat 29 is then impregnated with conditioned colloidal silica composition by means of applicator 44 which is supplied with colloidal silica composition held in mix tank 47 and blended with mixer 48 by means of pipe 46 and valve 49. Colloidal silica, hydrochloric acid and aluminum chlorhydrate are supplied to tank 47 through pipes 50. Excess conditioned colloidal silica is removed by a vacuum applied by vacuum plate 40.

Transfer box 38 then again picks up board 37 and transports it to drying rack 52 where it is dried and cured.

Example I

In order to show the effects of weight percent colloidal silica, pH, type of acid, weight percent aluminum chlorhydrate and temperature upon the gel time of conditioned colloidal silica, various aqueous conditioned colloidal silica systems are prepared using various percentages of colloidal silica and aluminum chlorhydrate, various pH's, hydrochloric acid (HCl) and acetic acid, at various temperatures. The times required for the systems to gel are then observed. The results are recorded in Table I. The notation ~ in the Table means an approximate or extrapolated value.

TABLE I

| Wt. percent colloidal silica | pH | Acid used | Wt. percent aluminum chlorhydrate | Temperature | Gel time minutes |
|---|---|---|---|---|---|
| 40 | 5.0 | HCl | None | 15°C | 126 |
| 40 | 5.7 | HCl | None | 15°C | 67 |
| 40 | 6.5 | HCl | None | 15°C | 96 |
| 40 | 5.0 | HCl | None | 22°C | 65 |
| 40 | 5.7 | HCl | None | 22°C | 27 |
| 40 | 6.5 | HCl | None | 22°C | 48 |
| 40 | 5.0 | HCl | None | 30°C | 27 |
| 40 | 5.7 | HCl | None | 30°C | 15 |
| 40 | 6.5 | HCl | None | 30°C | 24 |
| 40 | 6.75 | Acetic | None | 22°C | 110 |
| 40 | 5.9 | Acetic | None | 30°C | 88 |
| 40 | 6.75 | Acetic | None | 30°C | 52 |
| 40 | 7.4 | Acetic | None | 30°C | 120 |
| 40 | 5.9 | Acetic | None | 38°C | 26 |
| 40 | 6.75 | Acetic | None | 38°C | 19 |
| 40 | 7.4 | Acetic | None | 38°C | 64 |
| 20 | 5.6 | HCl | 1.3 | 21°C | 1 |
| 20 | 5.6 | HCl | 0.8 | 21°C | 1 |
| 20 | 5.6 | HCl | 0.5 | 21°C | 1 |
| 20 | 5.6 | HCl | 0.36 | 21°C | 3 |
| 20 | 5.6 | HCl | 0.31 | 21°C | 8 |
| 20 | 5.6 | HCl | 0.26 | 21°C | 18 |
| 20 | ~5.25 | HCl | 0.32 | 21°C | ~10 |
| 20 | ~5.25 | HCl | 0.28 | 21°C | ~16 |
| 20 | ~5.25 | HCl | 0.22 | 30°C | ~14 |

### TABLE I (cont.)

| Wt. percent colloidal silica | pH | Acid used | Wt. percent aluminum chlorhydrate | Temperature | Gel time minutes |
|---|---|---|---|---|---|
| 20 | ~5.25 | HCl | 0.2 | 30°C | ~25 |
| 20 | ~5.25 | HCl | 0.18 | 40°C | ~15 |
| 20 | ~5.25 | HCl | 0.2 | 40°C | ~10 |
| 20 | 4.9 | HCl | 0.32 | 20°C | ~34 |
| 20 | 4.9 | HCl | 0.26 | 40°C | ~10 |
| 20 | 5.1 | HCl | 0.26 | 40°C | ~5 |
| 20 | 5.35 | HCl | 0.32 | 20°C | ~6 |
| 20 | 5.35 | HCl | 0.26 | 40°C | ~2 |
| 15 | 5.25 | HCl | 0.28 | 21°C | ~35 |
| 15 | 5.25 | HCl | 0.24 | 21°C | ~>100 |
| 15 | 5.25 | HCl | None | 21°C | ~>100 |
| 15 | 5.25 | HCl | None | 21°C | ~>100 |

Example II

The following ingredients are combined. All percentages are by weight.

| | |
|---|---|
| 97.96% | Deionized water |
| 1.25% | Alumina-silica fibre having a mean fibre diameter of 2 to 3 microns |
| 0.1% | 40% colloidal silica sol |
| 0.03% | Bentonite clay |
| .03% | Aluminum Chlorhydrate |
| 0.63% | Ground silica having an average particle size of smaller than 44 $\mu$m (325 mesh) |

After mixing the ingredients, the slurry is pumped to a forming tank. A 61×102 cm (24 by 48 inch) mold is then dipped into the forming tank and slurry is pulled into the mold by a vacuum of 6000 Pa (45 cm Hg) and water passes through a 30 mesh screen having openings of 550 $\mu$m in the mold thus forming a 61×102 cm (24 by 48 inch) fibre mat on the screen. After 72 seconds, the mold is removed from the slurry and is allowed to drain for 30 seconds.

The fibre mat is then removed from the mold by means of a vacuum applied by a transfer device on a track. The mat is then transferred to a post soak station where 15 kg of a conditioned colloidal silica is uniformly applied to the mat. The conditioned colloidal silica comprises 15 percent by weight colloidal silica, sufficient HCl to adjust the pH to 5.0, and subsequent to adding HCl, sufficient aluminum chlorhydrate to lower the pH to 4.9.

After application of conditioned colloidal silica, a vacuum is applied to uniformly distribute the conditioned colloidal silica throughout the mat. The resulting board is then transferred by means of the transfer device to a drying rack where the board is dried at a temperature of 175°C for greater than 10 hours. The finished board has a thickness of 25.4 mm (1 inch) and a density of 0.48 g/cm³. The board contains no decomposable organic compounds and has a uniform strength and density. The lack of organic compounds prevents flame, fumes and discoloration upon exposure to high temperature conditions.

As used herein, a "vacuum" of an indicated number of pascals means a pressure less than prevailing atmospheric pressure by the indicated amount, e.g., a vacuum of 800 Pa is −800 Pa gauge pressure.

Claims

1. A process for forming a refractory fibre article by impregnating a fibre mat with a conditioned colloidal silica composition, permitting the conditioned colloidal silica composition to gel and drying the resulting fibre article; characterized in that the fibre mat is formed by placing a slurry of refractory fibres into a mold, and draining the liquid therefrom before the fibre mat is impregnated; and in that the conditioned colloidal silica composition comprises colloidal silica, acid, and aluminium chlorhydrate.

2. The process of Claim 1 wherein said fibre slurry is an aqueous slurry containing from 0.5 to 3 weight percent of refractory fibre and said article is an insulation board.

3. The process of Claim 2 wherein said fibre slurry contains from 0.04 to 0.2 weight percent colloidal silica.

4. The process of Claim 3 wherein said slurry contains from 0.01 to 0.1 percent colloidal clay.

5. The process of Claim 4 wherein said colloidal clay is bentonite.

6. The process of Claim 3 wherein said fibre mat is impregnated with from 10 to 80 volume percent of said conditioned colloidal silica composition.

7. The process of Claim 3 wherein the conditioned colloidal silica composition is an aqueous composition containing from 15 to 20 weight percent $SiO_2$, sufficient hydrochloric acid to obtain a pH of between 4.8 and 5.4; from 0.05 to 0.12 weight percent aluminium chlorhydrate and the balance being water.

8. The process of Claim 1 wherein said fibre article is dried at a temperature of from 150 to 600°C from 1 to 12 hours.

9. An inorganic refractory insulation article comprising randomly oriented refractory fibres retained by dried conditioned colloidal silica uniformly distributed throughout the article and from 0.001 to 1.5 weight percent of the decomposition product of aluminium chlorhydrate.

10. The article of Claim 9 wherein said article is a board having a density of from 0.4 to 0.6 g/cm³, containing from 30 to 50 weight percent fibre, from 10 to 45 weight percent dried colloidal silica, from 0.001 to 1.5 weight percent of the decomposition product of aluminium chlorhydrate, and the balance being a filler selected from the group consisting of colloidal clay, ground silica having an average particle size of smaller than 74 μm, and mixtures thereof.

## Revendications

1. Un procédé de fabrication d'un objet à base de fibres réfractaires en imprégnant un mat de fibres d'une composition de silice colloïdale conditionnée, en permettant à la composition de silice colloïdale conditionnée de se gélifier et en séchant l'objet à base de fibres résultant; caractérisé en ce qu'on forme le mat de fibres en plaçant une bouillie de fibres réfractaires dans un moule et on fait écouler le liquide avant que le mat de fibres ne soit imprégné; et en ce que la composition de silice colloïdale conditionnée comprend de la silice colloïdale, un acide et du chlorhydrate d'aluminium.

2. Un procédé selon la revendication 1, dans lequel la bouillie de fibres est une bouillie aqueuse contenant de 0,5 à 3 pour cent en poids de fibres réfractaires et l'objet est un panneau isolant.

3. Un procédé selon la revendication 2, dans lequel la bouillie de fibres contient de 0,04 à 0,2 pour cent en poids de silice colloïdale.

4. Un procédé selon la revendication 3, dans lequel la bouillie contient de 0,01 à 0,1 pour cent de silice colloïdale.

5. Un procédé selon la revendication 4, dans lequel la silice colloïdale est de la bentonite.

6. Un procédé selon la revendication 3, dans lequel le mat de fibres est imprégné de 10 à 80 pour cent en volume de la composition de silice colloïdale conditionnée.

7. Un procédé selon la revendication 3, dans lequel la composition de silice colloïdale conditionnée est une composition aqueuse contenant de 15 à 20 pour cent en poids de SiO₂, assez d'acide chlorhydrique pour que l'on obtienne un pH compris entre 4,8 et 5,4, de 0,05 à 0,12 pour cent en poids de chlorhydrate d'aluminium, le complément étant de l'eau.

8. Un procédé selon la revendication 1, dans lequel l'article à base de fibres est séché à une température comprise entre 150 et 600°C pendant 1 à 12 heures.

9. Un objet isolant en matière réfractaire inorganique comprenant des fibres réfractaires orientées au hasard retenues par de la silice colloïdale conditionnée séché distribuée uniformément dans tout l'objet et de 0,001 à 1,5 pour cent en poids du produit de décomposition du chlorhydrate d'aluminium.

10. Un objet selon la revendication 9, cet objet étant un panneau d'une masse volumique de 0,4 à 0,6 g/cm³, contenant de 30 à 50 pour cent en poids de fibres, de 10 à 45 pour cent en poids de silice colloïdale séchée, de 0,001 à 1,5 pour cent en poids du produit de décomposition du chlorhydrate d'aluminium le complément étant une charge choisie parmi l'argile colloïdale, une silice broyée ayant une grosseur moyenne de particules de moins de 74 μm et leurs mélanges.

## Patentansprüche

1. Verfahren zum Herstellen eines feuerfesten Fasererzeugnisses, bei welchem eine Fasermatte mit einer konditionierten kolloidalen Siliciumdioxid-Zusammensetzung imprägniert, der konditionierten kolloidalen Siliciumdioxid-Zusammensetzung das Gelieren gestattet und das resultierende Fasererzeugnis getrocknet wird, dadurch gekennzeichnet, daß die Fasermatter gebildet wird durch Einbringen einer Aufschlämmumg feuerfester Fasern in eine Form und Abziehen der Flüssigkeit aus derselben vor dem Imprägnieren der Fasermatte; und daß die konditionierte kolloidale Siliciumdioxid-Zusammensetzung kolloidales Siliciumdioxid, Säure sowie Aluminiumchlorhydrat aufweist.

2. Verfahren nach Anspruch 1, wobei die Faseraufschlämmung eine 0,5 bis 3 Gew.-% feuerfeste Fasern enthaltende wässrige Aufschlämmung ist und das Erzeugnis eine isolierende Platte ist.

3. Verfahren nach Anspruch 2, bei welchem die Faseraufschlämmung 0,04 bis 0,2 Gew.-% kolloidales Siliciumdioxid enthält.

4. Verfahren nach Anspruch 3, bei welchem die Aufschlämmung 0,01 bis 0,1 % kolloidalen Ton enthält.

5. Verfahren nach Anspruch 4, wobei der kolloidale Ton Bentonit ist.

6. Verfahren nach Anspruch 3, wobei die Fasermatte mit 10 bis 80 Vol.-% der konditionierten kolloidalen Siliciumdioxid-Zusammensetzung imprägniert wird.

7. Verfahren nach Anspruch 3, wobei die konditionierte kolloidale Siliciumdioxid-Zusammensetzung eine wässrige Zusammensetzung ist mit 15 bis 20 Gew.-% SiO₂, ausreichend Chlorwasserstoffsäure zum Erzielen eines pH-Wertes von 4,8 bis 5,4 und 0,05 bis 0,12 Gew.-% Aluminiumchlorhydrat, Rest Wasser.

8. Verfahren nach Anspruch 1, wobei das Fasererzeugnis bei einer Temperatur von 150 bis 600°C in 1 bis 12 Stunden getrocknet wird.

9. Anorganisches feuerfestes Isolationserzeugnis mit wirrorientierten feuerfesten Fasern, die durch getrocknetes konditioniertes kolloidales Siliciumdioxid an Ort und Stelle gehalten sind, welches gleichförmig durch das gesamte Erzeugnis verteilt ist und 0,01 bis 1,5 Gew.-% an Zersetzungsprodukten des Aluminiumchlorhydrats aufweist.

10. Erzeugnis nach Anspruch 9, wobei das Erzeugnis eine Platte mit einer Dichte von 0,4 bis 0,6 g/cm$^3$ ist und 30 bis 50 Gew.-% Fasern, 10 bis 45 Gew.-% getrocknetes kolloidales Siliciumdioxid, 0,001 bis 1,5 Gew.-% Zersetzungsprodukte des Aluminiumchlordydrats aufweist und als Rest ein Füllmittel enthält, welches ausgewählt ist aus einer aus kolloidalem Ton, gemahlenem Siliciumdioxid mit einer mittleren Teilchengröße von weniger als 74 $\mu$m sowie Mischungen derselben besteht.

# Fig. 1.

```
┌─────────────────┐    ┌─────────────────┐    ┌─────────────────┐    ┌─────────────────┐
│                 │    │                 │    │ IMPREGNATE MAT  │    │                 │
│ SLURRY, FIBERS  │    │ FORM FIBER MAT  │    │ WITH CONDITIONED│    │ DRY RESULTING   │
│    AND          │    │ FROM SLURRY AND │    │ COLLOIDAL SILICA│    │   ARTICLE       │
│   FILLERS       │    │    DRAIN        │    │ AND ALLOW TO GEL│    │                 │
└─────────────────┘    └─────────────────┘    └─────────────────┘    └─────────────────┘
```

Fig: 2.